(19) **Europäisches Patentamt / European Patent Office / Office européen des brevets**

(11) **EP 1 899 676 B1**

(12) **EUROPEAN PATENT SPECIFICATION**

(45) Date of publication and mention
of the grant of the patent:
**22.10.2008 Bulletin 2008/43**

(51) Int Cl.:
*G01B 11/24* (2006.01)    *G01N 21/95* (2006.01)
*G06T 7/00* (2006.01)    *G01B 11/30* (2006.01)

(21) Application number: **06765901.1**

(22) Date of filing: **27.06.2006**

(86) International application number:
**PCT/IB2006/052122**

(87) International publication number:
**WO 2007/000730 (04.01.2007 Gazette 2007/01)**

(54) **MAPPING A SURFACE PROFILE**

KARTIERUNG EINES OBERFLÄCHENPROFILS

APPAREIL DE MAPPAGE D'UN PROFIL DE SURFACE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.06.2005 EP 05105736**

(43) Date of publication of application:
**19.03.2008 Bulletin 2008/12**

(73) Proprietor: **Koninklijke Philips Electronics N.V.
5621 BA Eindhoven (NL)**

(72) Inventors:
• **VAN AMSTEL, Willem, D.**
**NL-5656 AA Eindhoven (NL)**
• **POTZE, Willem**
**NL-5656 AA Eindhoven (NL)**

(74) Representative: **Schouten, Marcus Maria
Philips
Intellectual Property & Standards
P.O. Box 220
5600 AE Eindhoven (NL)**

(56) References cited:
**WO-A-20/04063666    US-B1- 6 621 581**

• **GORDON W DAVIDSON ET AL: "Multiresolution
Phase Unwrapping for SAR Interferometry" IEEE
TRANSACTIONS ON GEOSCIENCE AND
REMOTE SENSING, IEEE SERVICE CENTER,
PISCATAWAY, NJ, US, vol. 37, no. 1, January
1999 (1999-01), XP011021153 ISSN: 0196-2892**
• **ZHONGQUAN WU ET AL: "A LINE-INTEGRATION
BASED METHOD FOR DEPTH RECOVERY FROM
SURFACE NORMALS" COMPUTER VISION
GRAPHICS AND IMAGE PROCESSING,
ACADEMIC PRESS, DULUTH, MA, US, vol. 43, no.
1, 1 July 1988 (1988-07-01), pages 53-66,
XP000000661**

**Description**

The invention relates to the field of measuring the surfaces of three-dimensional (3D) objects and more particularly to nano topography of processed and unprocessed wafers, the surface determination of optical elements such as reference mirrors or aspheric lenses, and to free-forms in ophthalmic and optics industry.

Obtaining the true measurement and mapping of a three-dimensional surface was traditionally done by mechanical probes. These probes comprised a diamond needle or stylus which was moved with a high precision over the surface while being a mechanical contact with that said surface. The measured profiles of subsequent stylus scans are stitched together to form a 3D-topography. However, mechanical probes are very slow and are more suited for measuring profiles than for measuring the full three-dimensional topography. Moreover, in many applications mechanical contact with the object is not allowed.

Generally known is the use of interferometry for the purpose of determining the three-dimensional topography. This widely used technique however faces a few basic limitations. One problem is that the measurement height-range is limited, as the fringe density is not allowed to be too high. Another disadvantage is that a lateral resolution is limited to the resolution of the sensor, which in most cases is a CCD-sensor.

Another possibility for obtaining a true measurement and mapping of a three-dimensional surface is the use of an apparatus performing slope measurements, and in particular optical slope measurements. These apparatus yield physical data which are slopes of the surface profile. These data will be called slope data in the description which follows. The surface profile is expressed by the mathematical function $g(\vec{x}) = 0$, whereby $\vec{x}$ denotes a location on the surface of the object. It has generally the form $g(\vec{x}) = f(x_1, x_2) - x_3$, which in the case of a Cartesian coordinate system becomes $g(\vec{x}) = z(x,y) - z$. Here $x_3$, or z respectively, is the quantity to be measured. Then the slope or gradient $\vec{\nabla}g(\vec{x})$ is determined by these apparatus. A numerical integration, e.g. a linear integration, is carried out in order to get the surface topography $g(\vec{x}) = 0$.

A basic problem with slope measurements is that a numerical integration is only successful when the raw data, this means the slope data, do not show significant errors. Thus, defective slope measurement values produce wrong height-values or attempt to propagate or smear out if simple linear integration schemes are used. More advanced integration methods known to the man skilled in the art may reduce this problem to some degree. However, the problem still exists. As an example, one such method is disclosed in WO 2004/06366.

It is an object of the present invention to determine whether slope data obtained from an apparatus for mapping the surface topography $g(\vec{x}) = 0$ of a surface of an object contain incorrect slope values.

Another object of the invention is to correct these incorrect slope values in the case of systematic errors.

This object and other objects are solved by the features of the independent claims. Preferred embodiments of the invention are described by the features of the dependent claims. It should be emphasized that any reference signs in the claims shall not be construed as limiting the scope of the invention.

A first aspect of the invention refers to an apparatus for mapping the surface profile $g(\vec{x}) = 0$ of a surface of an object. This is an apparatus comprising a sensor for measuring the gradient of the surface profile at predetermined measurement locations $\vec{x}$ on said surface. The sensor is an optical slope sensor which preferably consists of a lens and a position sensitive device at its focal plane. $\vec{\nabla}g(\vec{x})$ is the true or error-free gradient of the surface profile whereas the measurement values of this true gradient are denoted by $\vec{S}(\vec{x})$ and contain errors. The apparatus further comprises a computational entity for processing the measurement values $\vec{S}(\vec{x})$. This computational entity is adapted to calculate, for at least a portion of the surface, the curl of the measurement values $\vec{\nabla} \times \vec{S}(\vec{x})$. This is done for determining surface locations (error locations) at which the measurement values exhibit measurement errors, as error locations show values of $\vec{\nabla} \times \vec{S}(\vec{x})$ which deviates from zero. In other words the error locations are determined by values of $\vec{\nabla} \times \vec{S}(\vec{x})$ which are substantially non-zero.

The adaptation of the computational entity according to the present invention is motivated by the idea that for a smooth function $g(\vec{x})$ vector analysis rules that

$$\bar{\nabla} \times \left\{ \bar{\nabla} g(\bar{x}) \right\} = \bar{0}. \qquad\qquad (\text{equation } 1)$$

In the ideal case of no measurement errors an apparatus for mapping the surface profile $g(\vec{x})$ of a surface yields measurement values $\vec{S}(\vec{x}) = \vec{\nabla}g(\vec{x})$, and this means that

$$\vec{\nabla} \times \vec{S}(\vec{x}) = \vec{0} = \vec{\nabla} \times \left\{ \vec{\nabla} g(\vec{x}) \right\}. \qquad \text{(equation 2)}$$

However, if there are measurement errors, the value of $\vec{\nabla} \times \vec{S}(\vec{x})$ deviates from zero indicating a measurement error. All the locations where this deviation exceeds a certain threshold value will be regarded as locations at which the measurement value is not correct.

The apparatus measures the slopes at the surface locations in two directions. When these two directions are perpendicular to each other they represent two axes, namely the x-axis and the y-axis. In this case the height of the surface profile at a given location is given by the value of the z-axis which is perpendicular to the x- and y-axis. If the slope measured in the x-direction is denoted by $S_x$ and the slope in the y-direction is denoted by $S_y$, then in the case of a 3D Cartesian coordinate system $\vec{\nabla} \times \vec{S}(\vec{x}) = \vec{0}$ means that

$$\frac{\partial}{\partial x} S_y - \frac{\partial}{\partial y} S_x = 0 \qquad \text{(equation 3)}$$

as the first two components of $\vec{\nabla} \times \vec{S}(\vec{x})$ are identically zero. Thus the computational entity calculates equation 3 for all measurement locations on the surface, and identifies measurement errors by means of a deviation of its value from zero.

According to a preferred embodiment of the invention the curl of measurement values are visualized by means of a display. If a more or less flat surface should be investigated, it is possible to define a Cartesian coordinate system as described above. In this case the (components of the) curl of the measurement values can be plotted along a z-axis versus x and y. In this case the xy-plane represents the flat surface area. A visualization in which the curl of the measurement values is plotted shall be called curl map in the description which follows. The curl map gives a visual help in determining which types of errors might be relevant in the current set of slope data. The characteristics of this plot will show the man skilled in the art whether the measurement errors are predominantly random errors or are predominantly systematic errors. Random errors in this plot are characterized by peaks or spikes, whereas systematic errors show a more continuous and regular pattern. Furthermore, and as will be described below in more detail, an identification of the locations on the surface of the object at which the measurement values show significant measurement errors makes it possible to correct the measurement values. In this case a visualization of the curl map before and after the correction will demonstrate visually that the data quality has been improved, and to which degree.

According to another embodiment of the invention the computational entity is adapted to use the curl of the measurement values $\vec{\nabla} \times \vec{S}(\vec{x})$ for self-calibration. In this case the self-calibration is performed by the apparatus in such a way that the curl of the measurement values as a function of the calibration parameters is minimized. This can be done for a part of the surface, and is preferably done for the whole surface of this object. During the self-calibration, which might be called self-correction as well, apparatus parameters are modified and the computational entity tries to minimize the curl map searching for an optimum set of parameters. In this way the calibration for detector rotation can be improved, and it can be scanned for non-linearities or pixel-grid variations, for sensor-anisotropy. Other parameters to be optimized during the calibration process are the ratio between the y- and y-grid calibration constants, the ratio between the slope sensitivity constants in x- and y-direction, parameters to transfer measured voltages into slope values, or parameters to the measurement grid on the surface to be measured. As a matter of fact the parameters which are optimized during the self-calibration depend on the apparatus type, e.g. a deflectometer, which is used. All these parameters are however known to the man skilled in the art and thus need no further explanation.

This self-calibrating process can be repeated with the same object in a tilted and/or a laterally shifted position and/or with a different rotational orientation with respect to an axis of the coordinate system. As a matter of fact, this can be combined with measuring new objects. The result of all these measurements and parameter variations is a curl map having a minimized average squared curl, whereby averaging is carried out over the whole surface or over a part of the surface area. Furthermore an optimum set of apparatus parameters is found and the instrument is ready for use.

In an ideal situation the optimum set of apparatus parameters found in the calibration process mentioned above is constant over the lifetime of the apparatus (if the apparatus is stable). In real-life situations these optimum parameters will change over the time when a new self-calibration is carried out. The sets of apparatus parameters derived from these calibration steps can be used to monitor the stability and correctness of the apparatus.

Another preferred embodiment consists of a computational entity which is adapted to identify random defects on the surface of an object. A location on a surface of an object is thus identified to show a random defect by means of the curl of its measurement value and the deviation of this curl value from a threshold value. One possibility is to see whether the curl of the measurement value deviates from corresponding curl values of nearby locations. If there is a significant deviation, e.g. by more than a threshold value, the deviation is indicative of a random error. A second possibility is to compare the curl of the measurement value with the curl of an interpolated slope value, the interpolation being performed by means of slope values from the surroundings of the location. Again, if there is a significant deviation, e.g. by more than a threshold value, the deviation is indicative of a random error. In both cases this knowledge can be used in the integration step for reconstructing the 3D topography to get a more accurate topography. The defective slope value can be substituted with the interpolated slope value, or it can be attached a lower weight during the integration process.

If a surface quality has to be controlled in a production process, for example in a production of wafers, an apparatus for mapping the surface profile will map the surface profile of a multitude of wafers. In this case it is advantageous that the computational entity is adapted to compare the values of $\vec{\nabla} \times \vec{S}(\vec{x})$, or synonymously the values according to equation 3, of a multitude of wafers. This will be done by storing the curl map of each wafer, or of the data associated with each curl map, such that it can be used for a comparison. This comparison makes it possible to search for regular patterns among the curl maps in order to detect systematic errors in the production process which can be corrected accordingly. As a matter of fact, this approach is not restricted to wafers but can be applied in other cases as well.

According to a preferred embodiment of the invention the comparison mentioned in the last paragraph includes searching for error locations being common to all objects of said multitude of objects. If all the objects show error locations at the same position this is indicative of a systematic error in the production process of the objects. This systematic error might be indicative of dust particles on optical elements in an apparatus for producing wafers. In other cases the error locations determined by the method according to the invention represent areas on a wafer where polishing is insufficient, e.g. because polishing has been carried out with a tilted polisher. As can be derived from this explanation searching for error locations being common to all objects is helpful for finding systematic errors in the production process of theses objects. Then, the operator has two possibilities:

A first possibility is to determine whether the magnitude of $\vec{\nabla} \times \vec{S}(\vec{x})$ at these error locations determined in the first step correlates with the time at which the object have been produced. For that purpose it is necessary that each object has a time stamp associated with it such that the time at which the object has been produced is known. Such an change in the magnitude of $\vec{\nabla} \times \vec{S}(\vec{x})$ over the time is representative for a change in or at the production machine.

Furthermore, this change of magnitude can be analysed in more detail. If the magnitude of $\vec{\nabla} \times \vec{S}(\vec{x})$ changes gradually in time, this can be indicative of a drift in the measurement apparatus. Hence, one or more calibration parameters are changing in time. This is very important for the measurement apparatus. Hence, during normal measurements of products a possible drift in the measurement apparatus can be detected automatically. In addition, this drift can be corrected by minimizing the average squared $\vec{\nabla} \times \vec{S}(\vec{x}) \nabla \times$ over part or whole of the measurement area.

A second possibility is to monitor the size of the area represented by error locations over the time. Such a change indicates that the area where $\vec{\nabla} \times \vec{S}(\vec{x})$ deviates from zero changes, or in other words that the area changes where slopes cannot be measured accurately. This can be representative for a change in or at the production machine.

In a further preferred embodiment the computational entity is adapted to correct the measurement values exhibiting measurement errors. This will only be possible in the case of systematic errors.

A correction can be done in the following way. The surface profile $g(\vec{x})$ to be measured can be described by a function

$$g(\bar{x}) = g(x, y, z) = z(x, y) - z = 0 \qquad \text{(equation 4)}$$

where for the sake of simplicity a 3D Cartesian coordinate system is used. When the surface profile is measured the

slopes $S_y = \dfrac{\partial z}{\partial y}$ and $S_x = \dfrac{\partial z}{\partial x}$ are obtained. A systematic error of the apparatus can be described by functions

having parameters $\alpha_1, \alpha_2 \ldots \alpha_n$, whereby n is an integer. These parameters are characteristic for a systematic deviation of the slopes $S_x$ and $S_y$ from their true values. For instance, the following cases are possible:

1. The systematic deviation is caused by an incorrect orientation of the slope sensor. In this case the relation between the measured slopes which containing an error due to this misorientation, denoted by $\vec{S}^{measured}$, and the real slopes which would have been obtained without this misorientation, denoted by $\vec{S}^{real}$, is

$$\begin{pmatrix} S_x \\ S_y \end{pmatrix}^{measured} = \begin{pmatrix} \cos\alpha & -\sin\alpha \\ \sin\alpha & \cos\alpha \end{pmatrix} \begin{pmatrix} S_x \\ S_y \end{pmatrix}^{real} \qquad \text{(equation 5)}$$

whereby $\alpha$ is the tilt angle representing the incorrect orientation.

2. If a small calibration error in one slope component, e.g. $S_y$, occurs, the relation between measured slopes and real slopes is

$$S_x^{measured} = S_x^{real} \qquad \text{(equation 6)}$$

and

$$S_y^{measured} = \lambda S_y^{real} \qquad \text{(equation 7)}$$

with $\lambda$ being a real number.

3. If a small deviation in the pixel grid occurs, e.g. the y-direction, the relation between measured slopes and the real slopes is

$$S_x^{measured} = S_x^{real} \qquad \text{(equation 8)}$$

and

$$S_y^{measured} = S_y^{real} \qquad \text{(equation 9)}$$

However, the relation between the expected grid coordinates and the actual grid coordinates being used is

$$x^{actual} = x^{real} \qquad \text{(equation 10)}$$

and

$$y^{actual} = \nu \, y^{real} \qquad \text{(equation 11)}$$

whereby $\nu$, a real number, is a proportionality factor.

In a further preferred embodiment the computational entity is adapted to correct the measurement values exhibiting measurement errors for systematic errors, whereby the systematic error is represented by parameters $\alpha_1$, $\alpha_2 \ldots \alpha_n$, and that for correcting the measurement values the functional

$$G(\alpha_1, \alpha_2, ..\alpha_n) = \frac{1}{A} \int_A \left( \vec{\nabla} \times \vec{S}(\vec{x}) \cdot \vec{\nabla} \times \vec{S}(\vec{x}) \right) dA \qquad \text{(equation 12)}$$

is minimized, whereby the multitude of locations constitute the surface A of the object.

With this approach the fact is used that only a potential function of a vector field exists if the curl of that vector field is zero. In this case the parameters $\alpha_1, \alpha_2... \alpha_n$ defining the systematic deviation in a measurement values can be derived. Thus a minimization of the functional

$$G(\alpha_1, \alpha_2, ...\alpha_n) = \frac{1}{A} \int_A \left( \vec{\nabla} \times \vec{S}^{real} \cdot \vec{\nabla} \times \vec{S}^{real} \right) dA$$
$$= \frac{1}{A} \int_A \left( \vec{\nabla} \times \vec{F}(\alpha_1...\alpha_n, \vec{S}^{measured}) \cdot \vec{\nabla} \times \vec{F}(\alpha_1,...\alpha_n, \vec{S}^{measured}) \right) dA \qquad \text{(equation 13)}$$

is carried out, whereby

$$\vec{S}^{real} = \vec{F}(\alpha_1,...\alpha_n, \vec{S}^{measured}) = \vec{E}^{-1}(\alpha_1,...\alpha_n, \vec{S}^{measured}) \qquad \text{(equation 14)}$$

with

$$\vec{S}^{measured} = \vec{E}(\alpha_1,...\alpha_n, \vec{S}^{real}) \qquad \text{(equation 15)}$$

describe the relation between the measured slopes and the real slopes. After determining the parameters $\alpha_1, \alpha_2... \alpha_n$ the measured slope components can be corrected by using the relation

$$\vec{S}^{real} = \vec{F}(\alpha_1,...\alpha_n, \vec{S}^{measured}) \qquad \text{(equation 16)}$$

between real slopes and measured slopes.

The approach mentioned in the last paragraph can also be extended by including weighing functions in the integrand. Using these weighing functions influences certain parts of the measurement domain by making them larger or smaller in weight in comparison to other parts.

As can be derived from the paragraphs above the computational entity being part of the apparatus for mapping a surface profile is adapted to calculate the curl of the measurement values for determining error locations. This computational entity can be a computer and / or a computer program product. In the simplest case a computer only consists of an EPROM or an ASIC, or it comprises a processor, memory and software running on this hardware.

According to a preferred embodiment of the invention the sensor is an optical sensor. In this way the apparatus might be adapted to carry out deflectometry, wave front sensing, shearing interferometry, phase imaging, carry out the Schlieren & shadowgraph method or ellipsometry.

Another aspect of the invention refers to a computer program product designed to work in the apparatus disclosed above. When the computer program product is executed it carries out the following steps:

In a first step a multitude of measurement values are accessed, e.g. by a read command. Each measurement value represents the gradient of the surface profile at a surface location on the surface of an object. The multitude of surface locations represent at least a portion of the surface of the object.

In a second step the curl of the measurement values are calculated for at least a portion of the surface. In a third step surface locations are identified at which the curl of the measurement values deviates more in a predetermined threshold value from zero. At these locations the measurement values exhibit a measurement error.

These and other aspects of the invention will be apparent from and elucidated with reference to the embodiments described thereafter. It should be noted, that the use of reference signs shall not be construed as limiting the scope of the invention.

Fig. 1 shows in a schematic way the apparatus according to the invention,
Fig. 2 shows the curl of a measurement slope vector $\vec{S}(\vec{x})$ before carrying out a data correction,
Fig. 3 shows the curl of a measurement slope vector $\vec{S}(\vec{x})$ after carrying out a data correction.

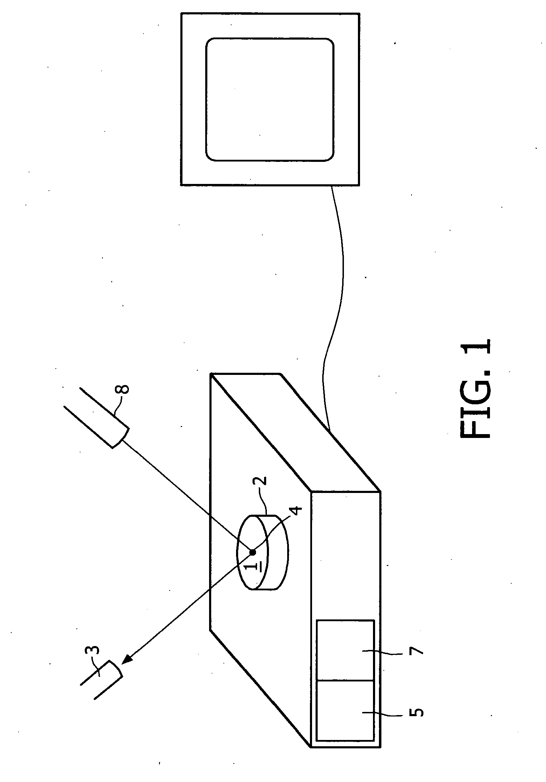

Detailed description of the drawings and of the preferred embodiments Figure 1 shows schematically an apparatus for mapping a surface profile of a surface of an object according to the invention. In this embodiment the apparatus is a 3D-deflectometer in the form of an experimental set-up. It has a slope resolution of 1 $\mu$rad, a slope range of 2 mrad, a height resolution of 1 nm per 20 mm. The sampling distance was 30 $\mu$m, the measurement area 110 x 500 mm. The deflectometer used a linear scanline having a length of 110 mm.

The deflectometer contained a sensor 3, namely a Shack-Hartmann sensor for detecting light from the surface 1 of a wafer 2 as indicated by the arrow. The light originated from a laser

A focal spot on the surface 1 of the wafer 2 was circular and had a diameter of 110 micrometers. The control unit 7 insured a step wised scaling of the surface by means of a sensor 3. The acquired data were transferred to computational entity 5 and stored on a storage means 8, namely a hard disc.

The computational entity 5 processed the measurement values. It calculated $\vec{\nabla} \times \vec{S}(\vec{x})$, which as the x- and y-components are identically zero in the case that g(x, y, z) has the usual form g(x, y, z) = z - z(x, y), the relevant condition for the measured slopes follows from the z-component. Hence, in the ideal case the measured slope components have

to satisfy $\dfrac{\partial}{\partial x}\left(S_y\right) - \dfrac{\partial}{\partial y}\left(S_x\right) = 0$ .

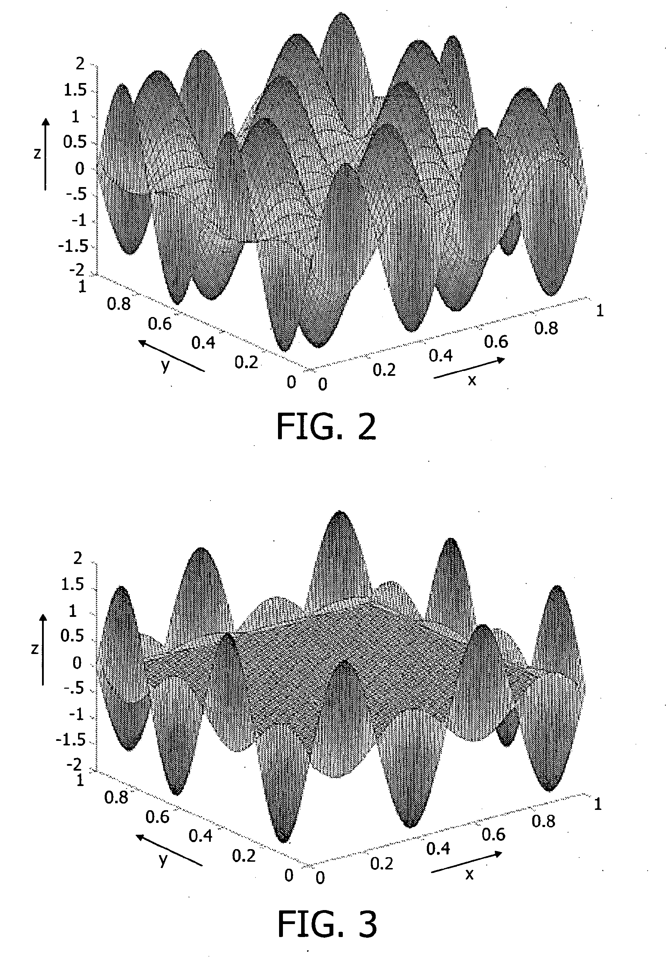

The values of this term can be derived from figure 2, in which this term is plotted versus the X- and Y-coordinate at which this term has been determined. Figure 2 shows irregular pattern being indicative of systematic errors. Especially in the central part of this figure a deviation from zero can be seen. This deviation from zero represents measurement errors.

In the next step these data has been corrected. In a first correction step the orientation of the slope sensor has been corrected, whereby it has been assumed that the error in orientation has been small. In this case the relation between the real slope and the measured slope is $\begin{pmatrix} S_x \\ S_y \end{pmatrix}^{measured} = \begin{pmatrix} \cos\alpha & -\sin\alpha \\ \sin\alpha & \cos\alpha \end{pmatrix}\begin{pmatrix} S_x \\ S_y \end{pmatrix}^{real}$ . Then the third component of the curl of the slope vector becomes

$$\frac{\partial S_y}{\partial x} - \frac{\partial S_x}{\partial y} = -\sin\alpha\left(\frac{\partial S_x^{measured}}{\partial x} + \frac{\partial S_y^{mesured}}{\partial y}\right)$$
$$+ \cos\alpha\left(\frac{\partial S_y^{measured}}{\partial x} - \frac{\partial S_x^{measured}}{\partial y}\right) .$$
$$\approx -\alpha\left(\frac{\partial S_x^{measured}}{\partial x} + \frac{\partial S_y^{measured}}{\partial y}\right) + \left(\frac{\partial S_y^{measured}}{\partial x} - \frac{\partial S_x^{measured}}{\partial y}\right)$$

The function to be minimized becomes

$$G(\alpha) = \frac{1}{A} \iint_A \left( -\alpha \left( \frac{\partial S_x^{measured}}{\partial x} + \frac{\partial S_y^{measured}}{\partial y} \right) + \left( \frac{\partial S_y^{measured}}{\partial x} - \frac{\partial S_x^{measured}}{\partial y} \right) \right)^2 dA \, .$$

This function has its minimum for

$$\alpha = \frac{\iint_A \left( \frac{\partial S_y^{measured}}{\partial x} - \frac{\partial S_x^{measured}}{\partial y} \right) \left( \frac{\partial S_x^{measured}}{\partial x} + \frac{\partial S_y^{measured}}{\partial y} \right) dA}{\iint_A \left( \frac{\partial S_x^{measured}}{\partial x} + \frac{\partial S_y^{measured}}{\partial y} \right) \left( \frac{\partial S_x^{measured}}{\partial x} + \frac{\partial S_y^{measured}}{\partial y} \right) dA} \, .$$

Hence, the angle $\alpha$ can be determined and the slope data has been corrected for this small orientation error of the slope sensor.

In a second step a small calibration error in one slope component, for example the Y-component, has been corrected. In this case the relationship between the measured slope and the real slope is $\begin{aligned} S_x^{measured} &= S_x^{real} \\ S_y^{measured} &= \lambda S_y^{real} \end{aligned}$ . In this case $\lambda$ is a proportionality factor. In this case the inverse relation is

$S_x^{real} = S_x^{measzred} , S_y^{real} = \frac{1}{\lambda} S_y^{measured} = \mu S_y^{measured}$ . In this case the function to be minimized is

$$G(\mu) = \frac{1}{A} \iint_A \left( \frac{\partial \mu S_y}{\partial x} - \frac{\partial S_x}{\partial y} \right)^2 dA \, .$$ This function has its minimum at the value $\mu = \dfrac{\iint_A \dfrac{\partial S_x}{\partial y} \dfrac{\partial S_y}{\partial x} dA}{\iint_A \dfrac{\partial S_y}{\partial x} \dfrac{\partial S_y}{\partial x} dA}$ . This cor-

rection has been performed to the y-component.

LIST OF REFERENCE NUMERALS:

| 01 | surface |
|----|---------|
| 02 | object |
| 03 | sensor |
| 04 | measurement location |
| 04' | measurement location |
| 04" | measurement location |
| 05 | computational entity |
| 06 | error location |
| 07 | display |
| 08 | storage unit |

**Claims**

1.   Apparatus for mapping a surface topography $g(\vec{x}) = 0$ of a surface (1) of an object (2), comprising:

   a) a sensor (3) for measuring the gradient $\vec{\nabla} g(\vec{x})$ of the surface topography at a predetermined measurement

location (4) $\vec{x}$ on said surface,

b) a computational entity (5) for processing the measurement values $\vec{S}(\vec{x})$ of the gradient of the surface topography from a multitude of measurement locations,

c) the computational entity being adapted to calculate, for at least a portion of the surface, the curl of the measurement values $\vec{\nabla} \times \vec{S}(\vec{x})$ for determining error locations at which the measurement values exhibit measurement errors, the error locations being **characterized by** having values of $\vec{\nabla} \times \vec{S}(\vec{x})$ which deviate from zero by more than a threshold value.

2. Apparatus according to claim 1, **characterized in that** the apparatus further comprises a display (7) for visualizing the curl of the measurement values.

3. Apparatus according to claim 1, **characterized in that** the computational entity is adapted to carry out a self-calibration during which apparatus parameters are modified such that the average squared curl of the measurement values is minimized.

4. Apparatus according to claim 1, **characterized in that** the computational entity is adapted to identify surface locations with random defects by determining those surface locations which have values of $\vec{\nabla} \times \vec{S}(\vec{x})$ which deviate more than a threshold value from values of $\vec{\nabla} \times \vec{S}(\vec{x})$ of neighbouring surface locations.

5. Apparatus according to claim 1, **characterized in that** the computational entity is adapted to carry out a comparison of the values of $\vec{\nabla} \times \vec{S}(\vec{x})$ of a multitude of objects (2).

6. Apparatus according to claim 5, **characterized in that** the comparison includes searching for error locations being common to all objects of said multitude of objects.

7. Apparatus according to claim 5, **characterized in that** the comparison comprises:

   a) searching for error locations being common to all objects of said multitude of objects,
   b) determining whether the magnitude of $\vec{\nabla} \times \vec{S}(\vec{x})$ at the error locations determined in step a) correlates with the time at which the objects have been produced and/or measured.

8. Apparatus according to claim 1, **characterized in that** the computational entity is adapted to correct the measurement values exhibiting measurement errors for systematic errors, whereby for correcting the measurement values the functional

$$G(\alpha_1, \alpha_2, ..\alpha_n) = \frac{1}{A} \int_A \left( \vec{\nabla} \times \vec{S}(\vec{x}) \cdot \vec{\nabla} \times \vec{S}(\vec{x}) \right) dA$$

is minimized, whereby the multitude of measurement locations constitute the surface A of the object and whereby parameters $\alpha_1, \alpha_2 ... \alpha_n$ represent the systematic error.

9. Apparatus according to claim 1, **characterized in that** the computational entity is a computer and/or a computer program product.

10. Apparatus according to claim 1, **characterized in that** the sensor is an optical sensor.

11. Apparatus according to claim 1, **characterized in that** the apparatus is adapted to carry out deflectometry, wave front sensing, shearing interferometry, phase imaging, the Schlieren & shadowgraph method or ellipsometry.

12. Computer program product for mapping the surface topography $g(\vec{x}) = 0$ of a surface (1) of an object (2), the computer program product comprising a computer readable medium, having thereon computer program code means, when said program is loaded, to make the computer executable for:

   a) accessing a multitude of measurement values $\vec{S}(\vec{x})$, each measurement value being the gradient of the surface profile at a surface location $\vec{x}$ on said surface, the multitude of surface locations representing at least a portion of the surface of the object,

b) calculating, for at least a portion of the surface, the curl of the measurement values $\vec{\nabla} \times \vec{S}(\vec{x})$,
c) identifying surface locations, at which the curl of the measurement values $\vec{\nabla} \times \vec{S}(\vec{x})$ deviates more than a predetermined threshold value from zero, as being error locations at which the measurement value exhibits a measurement error.

**13.** Computer program product according to claim 12, **characterized in that** the computer program product is adapted to visualize the curl of the measurement values on a graphical display.

**14.** Computer program product according to claim 12, **characterized in that** the computer program product is adapted to carry out a comparison of the values of $\vec{\nabla} \times \vec{S}(\vec{x})$ of a multitude of objects (2).

**15.** Computer program product according to claim 12, **characterized in that** the comparison includes searching for error locations being common to all objects of said multitude of objects.

**16.** Computer program product according to claim 12, **characterized in that** the comparison comprises:

a) searching for error locations being common to all objects of said multitude of objects,
b) determining whether the magnitude of $\vec{\nabla} \times \vec{S}(\vec{x})$ at the error locations correlates with the time at which the objects have been produced and/or measured.

**17.** Method for mapping a surface topography $g(\vec{x}) = 0$ of a surface (1) of an object (2) comprising the following steps:

a) measuring the gradient of the surface topography $\vec{\nabla}g(\vec{x})$ at a multitude of measurement locations (4) on the surface,
b) calculating, for at least a portion of the surface, the curl of the measurement values $\vec{\nabla} \times \vec{S}(\vec{x})$ for determining error locations (6) at which the measurement values exhibit measurement errors.

**Patentansprüche**

**1.** Gerät zum Abbilden einer Oberflächentopografie $g(\bar{x}) = 0$ einer Oberfläche (1) eines Objekts (2), das Folgendes umfasst:

a) einen Sensor (3) zum Messen des Gradienten $\overline{\nabla}g(\bar{x})$ der Oberflächentopografie an einem vorgegebenen Messort (4) $\bar{x}$ auf der genannten Oberflläche,
b) eine Recheneinheit (5) zum Verarbeiten der Messwerte $\overline{S}(\bar{x})$ des Gradienten der Oberflächentopografie von einer Vielzahl von Messorten,
c) wobei die Recheneinheit dafür ausgelegt ist, für zumindest einen Teil der Oberfläche die Rotation der Messwerte $\overline{\nabla} \times \overline{S}(\bar{x})$ zu berechnen, um Fehlerorte zu ermitteln, an denen die Messwerte Messfehler aufweisen, wobei die Fehlerorte **dadurch gekennzeichnet sind, dass** sie Werte von $\overline{\nabla} \times \overline{S}(\bar{x})$ haben, die um mehr als einen Schwellenwert von Null abweichen.

**2.** Gerät nach Anspruch 1, **dadurch gekennzeichnet, dass** das Gerät weiterhin eine Anzeige (7) zum Visualisieren der Rotation der Messwerte umfasst.

**3.** Gerät nach Anspruch 1, **dadurch gekennzeichnet, dass** die Recheneinheit dafür ausgelegt ist, eine Selbstkalibrierung durchzuführen, während der Geräteparameter derart modifiziert werden, dass das quadratische Mittel der Rotation der Messwerte minimiert wird.

**4.** Gerät nach Anspruch 1, **dadurch gekennzeichnet, dass** die Recheneinheit dafür ausgelegt ist, Oberflächenorte mit Zufallsdefekten zu identifizieren, indem diejenigen Oberflächenorte ermittelt werden, die Werte $\overline{\nabla} \times \overline{S}(\bar{x})$ haben, welche um mehr als einen Schwellenwert von Werten $\overline{\nabla} \times \overline{S}(\bar{x})$ von benachbarten Oberflächenorten abweichen.

**5.** Gerät nach Anspruch 1, **dadurch gekennzeichnet, dass** die Recheneinheit dafür ausgelegt ist, einen Vergleich der Werte $\overline{\nabla} \times \overline{S}(\bar{x})$ von einer Vielzahl von Objekten (2) durchzuführen.

**6.** Gerät nach Anspruch 5, **dadurch gekennzeichnet, dass** der Vergleich die Suche nach Fehlerorten umfasst, die allen Objekten der genannten Vielzahl von Objekten gemeinsam sind.

**7.** Gerät nach Anspruch 5, **dadurch gekennzeichnet, dass** der Vergleich Folgendes umfasst:

a) Suchen nach Fehlerorten, die allen Objekten der genannten Vielzahl von Objekten gemeinsam sind,
b) Ermitteln, ob die Größe von $\overline{\nabla} \times \overline{S}(\overline{x})$ an den in Schritt a) ermittelten Fehlerorten mit dem Zeitpunkt korreliert, an dem die Objekte erzeugt und/oder gemessen wurden.

**8.** Gerät nach Anspruch 1, **dadurch gekennzeichnet, dass** die Recheneinheit dafür ausgelegt ist, die Messwerte mit Messfühlern auf systematische Fehler zu korrigieren, wobei zur Korrektur der Messwerte die Funktion

$$G(\alpha_1, \alpha_2, ...\alpha_n) = \frac{1}{A}\int_A \left(\overline{\nabla} \times \overline{S}(\overline{x}) \cdot \overline{\nabla} \times \overline{S}(\overline{x})\right) dA$$

minimiert wird, wobei die Vielzahl von Messorten die Oberfläche A des Objekts darstellt und wobei die Parameter $\alpha_1$, $\alpha_2$, ...$\alpha_n$ den systematischen Fehler darstellen.

**9.** Gerät nach Anspruch 1, **dadurch gekennzeichnet, dass** die Recheneinheit ein Computer und/oder ein Computerprogrammprodukt ist.

**10.** Gerät nach Anspruch 1, **dadurch gekennzeichnet, dass** der Sensor ein optischer Sensor ist.

**11.** Gerät nach Anspruch 1, **dadurch gekennzeichnet, dass** das Gerät dafür ausgelegt ist, eine Deflektrometrie, Wellenfronterfassung, Scherungs-Interferometrie, Phasenbildgebung, das Schlieren & Schattengraphverfahren oder Ellipsometrie durchzuführen.

**12.** Computerprogrammprodukt zum Abbilden der Oberflächentopografie $g(\overline{x})$ = 0 einer Oberfläche (1) eines Objekts (2), wobei das Computerprogrammprodukt ein computerlesbares Medium umfasst, auf dem sich Computerprogrammcodemittel befinden, die, wenn das genannte Programm geladen wird, den Computer veranlassen, Folgendes auszuführen:

a) Zugreifen auf eine Vielzahl von Messwerten $\overline{S}(\overline{x})$, wobei jeder Messwert der Gradient des Oberflächenprofils an einem Oberflächenort $\overline{x}$ auf der genannten Oberfläche ist und die Vielzahl der Oberflächenorte mindestens einen Teil der Oberfläche des Objekts darstellt,
b) Berechnen, für zumindest einen Teil der Oberfläche, der Rotation der Messwerte $\overline{\nabla} \times \overline{S}(\overline{x})$,
c) Identifizieren von Oberflächenorten, an denen die Rotation der Messwerte $\overline{\nabla} \times \overline{S}(\overline{x})$ um mehr als einen vorgegebenen Schwellenwert von Null abweicht, als Fehlerorte, an denen der Messwert einen Messfehler aufweist.

**13.** Computerprogrammprodukt nach Anspruch 12, **dadurch gekennzeichnet, dass** das Computerprogrammprodukt dafür ausgelegt ist, die Rotation der Messwerte auf einer grafischen Anzeige zu visualisieren.

**14.** Computerprogrammprodukt nach Anspruch 12, **dadurch gekennzeichnet, dass** das Computerprogrammprodukt dafür ausgelegt ist, einen Vergleich der Werte $\overline{\nabla} \times \overline{S}(\overline{x})$ von einer Vielzahl von Objekten (2) durchzuführen.

**15.** Computerprogrammprodukt nach Anspruch 12, **dadurch gekennzeichnet, dass** der Vergleich das Suchen nach Fehlerorten beinhaltet, die allen Objekten der genannten Vielzahl von Objekten gemeinsam sind.

**16.** Computerprogrammprodukt nach Anspruch 12, **dadurch gekennzeichnet, dass** der Vergleich Folgendes umfasst:

a) Suchen nach Fehlerorten, die allen Objekten der genannten Vielzahl von Objekten gemeinsam sind,
b) Ermitteln, ob die Größe von $\overline{\nabla} \times \overline{S}(\overline{x})$ an den Fehlerorten mit dem Zeitpunkt korreliert, an dem die Objekte erzeugt und/oder gemessen wurden.

**17.** Verfahren zum Abbilden einer Oberflächentopografie $g(\overline{x})$ = 0 einer Oberfläche (1) eines Objekts (2), das die folgenden Schritte umfasst:

a) Messen des Gradienten der Oberflächentopografie $\overline{\nabla}g(\overline{x})$ an einer Vielzahl von Messorten (4) auf der Oberfläche,

b) Berechnen, für zumindest einen Teil der Oberfläche, der Rotation der Messwerte $\overline{\nabla} \times \overline{S}(\vec{x})$ zum Ermitteln von Fehlerorten (6), an denen die Messwerte Messfehler aufweisen.

## Revendications

1. Appareil pour mettre en correspondance une topographie de surface $g(\vec{x}) = 0$ d'une surface (1) d'un objet (2), comprenant:

a) un capteur (3) pour mesurer le gradient $\vec{\nabla} g(\vec{x})$ de la topographie de surface en un emplacement de mesure prédéterminé (4) $\vec{x}$ sur ladite surface;
b) une entité de calcul (5) pour traiter les valeurs de mesure $\vec{S}(\vec{x})$ du gradient de la topographie de surface depuis une multitude d'emplacements de mesure;
c) l'entité de calcul étant à même de calculer, pour au moins une partie de la surface, le rotationnel des valeurs de mesure $\vec{\nabla} \times \vec{S}(\vec{x})$ pour déterminer des emplacements d'erreur au niveau desquels les valeurs de mesure présentent des erreurs de mesure, les emplacements d'erreur étant **caractérisés en ce qu'**ils présentent des valeurs de $\vec{\nabla} \times \vec{S}(\vec{x})$ qui s'écartent de zéro de plus qu'une valeur seuil.

2. Appareil suivant la revendication 1, **caractérisé en ce que** l'appareil comprend en outre un afficheur (7) pour visualiser le rotationnel des valeurs de mesure.

3. Appareil suivant la revendication 1, **caractérisé en ce que** l'entité de calcul est à même d'exécuter un auto-étalonnage pendant lequel des paramètres de l'appareil sont modifiés de sorte que le rotationnel au carré moyen des valeurs de mesure est réduit.

4. Appareil suivant la revendication 1, **caractérisé en ce que** l'entité de calcul est à même d'identifier des emplacements de surface présentant des défauts aléatoires en déterminant les emplacements de surface qui présentent des valeurs de $\vec{\nabla} \times \vec{S}(\vec{x})$ qui s'écartent de plus qu'une valeur seuil par rapport aux valeurs de $\vec{\nabla} \times \vec{S}(\vec{x})$ d'emplacements de surface voisins.

5. Appareil suivant la revendication 1, **caractérisé en ce que** l'entité de calcul est à même d'effectuer une comparaison des valeurs de $\vec{\nabla} \times \vec{S}(\vec{x})$ d'une multitude d'objets (2).

6. Appareil suivant la revendication 5, **caractérisé en ce que** la comparaison inclut la recherche d'emplacements d'erreur communs à tous les objets de ladite multitude d'objets.

7. Appareil suivant la revendication 5, **caractérisé en ce que** la comparaison comprend :

a) la recherche d'emplacements d'erreur communs à tous les objets de ladite multitude d'objets;
b) le fait de déterminer si la grandeur de $\vec{\nabla} \times \vec{S}(\vec{x})$ au niveau des emplacements d'erreur déterminés à l'étape a) est en corrélation avec le moment auquel les objets ont été produits et/ou mesurés.

8. Appareil suivant la revendication 1, **caractérisé en ce que** l'entité de calcul est à même de corriger des erreurs systématiques dans les valeurs de mesure présentant des erreurs systématiques, par lequel, pour corriger les valeurs de mesure, le

$$G(\alpha_1, \alpha_2, .. \alpha_n) = \frac{1}{A} \int_A \left( \vec{\nabla} \times \vec{S}(\vec{x}) \cdot \vec{\nabla} \times \vec{S}(\vec{x}) \right) dA \text{ fonctionnel}$$

est réduit, par lequel la multitude d'emplacements de mesure forment la surface A de l'objet et par lequel les paramètres $\alpha_1, \alpha_2, .. \alpha_n$ représentent l'erreur systématique.

9. Appareil suivant la revendication 1, **caractérisé en ce que** l'entité de calcul est un ordinateur et/ou un produit formant programme informatique.

**10.** Appareil suivant la revendication 1, **caractérisé en ce que** le capteur est un capteur optique.

**11.** Appareil suivant la revendication 1, **caractérisé en ce que** l'appareil est à même d'exécuter une déflectométrie, une détection de front d'onde, une interférométrie à dédoublement, une imagerie de phase, le procédé par strioscopie et ombroscopie ou une ellipsométrie.

**12.** Produit formant programme informatique pour mettre en correspondance la topographie de surface $g(\vec{x}) = 0$ d'une surface (1) d'un objet (2), le produit formant programme informatique comprenant un support lisible par ordinateur, sur lequel se trouve un moyen formant code de programme informatique, lorsque ledit programme est chargé, pour rendre l'ordinateur exécutable pour:

a) accéder à une multitude de valeurs de mesure $\vec{S}(\vec{x})$, chaque valeur de mesure étant le gradient du profil de surface en un emplacement de surface $\vec{x}$ sur ladite surface, la multitude d'emplacements de surface représentant au moins une partie de la surface de l'objet;

b) le calcul, pour au moins une partie de la surface, du rotationnel des valeurs de mesure $\vec{\nabla} \times \vec{S}(\vec{x})$;

c) l'identification d'emplacements de surface, au niveau desquels le rotationnel des valeurs de mesure $\vec{\nabla} \times \vec{S}(\vec{x})$ s'écarte de plus qu'une valeur seuil prédéterminée par rapport à zéro, s'agissant d'emplacements d'erreur au niveau desquels la valeur de mesure présente une erreur de mesure.

**13.** Produit formant programme informatique suivant la revendication 12, **caractérisé en ce que** le produit formant programme informatique est à même de visualiser le rotationnel des valeurs de mesure sur un afficheur graphique.

**14.** Produit formant programme informatique suivant la revendication 12, **caractérisé en ce que** le produit formant programme informatique est à même d'effectuer une comparaison des valeurs de $\vec{\nabla} \times \vec{S}(\vec{x})$ d'une multitude d'objets (2).

**15.** Produit formant programme informatique suivant la revendication 12, **caractérisé en ce que** la comparaison inclut la recherche d'emplacements d'erreur communs à tous les objets de ladite multitude d'objets.

**16.** Produit formant programme informatique suivant la revendication 12, **caractérisé en ce que** la comparaison comprend :

a) la recherche d'emplacements d'erreur communs à tous les objets de ladite multitude d'objets;

b) le fait de déterminer si la grandeur de $\vec{\nabla} \times \vec{S}(\vec{x})$ au niveau des emplacements d'erreur est en corrélation avec le moment auquel les objets ont été produits et/ou mesurés.

**17.** Procédé pour mettre en correspondance une topographie de surface $g(\vec{x}) = 0$ d'une surface (1) d'un objet (2), comprenant les étapes suivantes:

a) la mesure du gradient de la topographie de surface $\vec{\nabla} g(\vec{x})$ en une multitude d'emplacements de mesure (4) sur la surface;

b) le calcul, pour une partie au moins de la surface, du rotationnel des valeurs de mesure $\vec{\nabla} \times \vec{S}(\vec{x})$ pour déterminer des emplacements d'erreur (6) au niveau desquels les valeurs de mesure présentent des erreurs de mesure.

FIG. 1

EP 1 899 676 B1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200406366 A